# EUROPEAN PATENT APPLICATION

(11) **EP 4 134 620 A1**
(43) Date of publication of application: **15.02.2023**
(21) Application number: 21783688.1
(22) Date of filing: 30.03.2021
(51) Int. Cl.: G01C 9/06, G01C 15/00

(54) **TILT SENSOR AND DATA ACQURING DEVICE**

(30) Priority: 09.04.2020 JP 2020070372
(71) Applicant: TOPCON CORPORATION, Tokyo 174-8580 (JP)
(72) Inventor: SHOJI, Naoki, Tokyo 174-8580 (JP); OTOMO, Fumio, Tokyo 174-8580 (JP)
(74) Representative: Mewburn Ellis LLP
(86) International application number: PCT/JP2021/013720
(87) International publication number: WO 2021/205948

(57) **Abstract**

Provided are an inclination sensor that can ensure accuracy of detecting an inclination angle with respect to a horizontal direction while suppressing drift in output values from an acceleration sensor, and a data acquisition device including the inclination sensor. An inclination sensor 6 includes a gimbal mechanism 60 that is rotatably supported around a first shaft 65 and a second shaft 64, a first motor 654 that rotates the first shaft 65, a second motor 644 that rotates the second shaft 64, a first encoder 655 that detects a rotation angle of the first shaft 65, a second encoder 645 that detects a rotation angle of the second shaft 64, an acceleration sensor 631 that is disposed in the gimbal mechanism 60, and a control unit 66 that arithmetically determines the inclination angle with respect to the horizontal direction on the basis of at least one of the rotation angle of the first shaft 65 and the rotation angle of the second shaft 64 when one of the output values from the acceleration sensor 631 indicates at least any one of a maximum value, a minimum value, and a median value between the maximum value and the minimum value.

## Description

### [Technical Field]

The present invention relates to an inclination sensor to be provided in a data acquisition device, which requires sensing of an inclination angle with respect to a horizontal direction, such as a surveying device or an image acquisition device, and to the data acquisition device including the inclination sensor.

### [Background Art]

Examples of a sensor that detects an inclination angle of a data acquisition device, such as a surveying device or an image acquisition device, with respect to a horizontal direction include a tilt sensor. However, the tilt sensor, while being able to detect the horizontal with high accuracy, has a problem of a relatively narrow range in which the inclination angle is detected.

Meanwhile, PTL 1 discloses an attitude detection device including a tilt sensor and an acceleration sensor. Compared to the tilt sensor, the acceleration sensor can detect a larger inclination angle. Therefore, the attitude detection device described in PTL 1 is capable of attitude detection of all attitudes, while ensuring detection accuracy. However, when the attitude detection device includes both of the tilt sensor and the acceleration sensor, the attitude detection device is increased in size, in which respect the attitude detection device described in PTL 1 has room for improvement.

Accordingly, to achieve a size reduction of an inclination sensor that senses an inclination angle with respect to a horizontal direction, one conceivable measure is to provide only an acceleration sensor without providing a tilt sensor. However, the acceleration sensor has a problem of detection accuracy lower than that of the tilt sensor. In other words, the acceleration sensor is affected by a change in environment such as a temperature, an atmospheric pressure, a humidity, or a magnetic field, and consequently drift may occur in output values from the acceleration sensor. Otherwise, the acceleration sensor continues to be affected by the change in environment, and consequently the output values from the acceleration sensor change over time, which may cause drift in the output values from the acceleration sensor.

### [Citation List]

### [Patent Literature]

[PTL 1] Japanese Patent Application Publication No. 2016-151423

### [Summary of Invention]

### [Technical Problem]

The present invention has been made in order to solve the problem described above, and an object of the present invention is to provide an inclination sensor that can suppress drift in output values from an acceleration sensor and ensure accuracy of detecting an inclination angle with respect to a horizontal direction and a data acquisition device including the inclination sensor.

### [Solution to Problem]

The problem described above is solved by an inclination sensor according to the present invention including: gimbal mechanism that has a first shaft and a second shaft perpendicular to the first axis and that is rotatably supported around the first shaft and the second shaft; a first motor that rotates the first shaft; a second motor that rotates the second shaft; a first encoder that detects a rotation angle of the first shaft rotated by the first motor; a second encoder that detects a rotation angle of the second shaft rotated by the second motor; an acceleration sensor that is disposed in the gimbal mechanism in a state where an origin point of coordinate axes is coincident with a point of intersection of a shaft center of the first shaft and a shaft center of the second shaft; and a control unit that drives at least one of the first motor and the second motor, continuously rotates the acceleration sensor around at least one of the first shaft and the second shaft, and arithmetically determines an inclination angle with respect to a horizontal direction on the basis of at least one of the rotation angle of the first shaft and the rotation angle of the second shaft which are respectively detected by the first encoder and the second encoder when one of output values from the acceleration sensor indicates at least any one of a maximum value, a minimum value, and a median value between the maximum value and the minimum value.

In the inclination sensor according to the present invention, the acceleration sensor is disposed in the gimbal mechanism in the state where the origin point of the coordinate axes is coincident with the point of intersection of the shaft center of the first shaft of the gimbal mechanism and the shaft center of the second shaft of the gimbal mechanism. Then, the control unit drives at least one of the first motor and the second motor, and continuously rotates the acceleration sensor around at least one of the first shaft of the gimbal mechanism and the second shaft of the gimbal mechanism. The control unit also arithmetically determines the inclination angle with respect to the horizontal direction on the basis of at least either of the rotation angle of the first shaft and the rotation angle of the second shaft which are respectively detected by the first encoder and the second encoder when the output value from the acceleration sensor indicates at least any one of the maximum value, the minimum value, and the median value between the maximum value and the minimum value. In other words, the control unit continuously rotates the acceleration sensor to thereby continue to detect a time when the output value from the acceleration sensor indicates at least any one of the maximum value, the minimum value, and the median value between the maximum value and the minimum value, i.e., a time when one of coordinate axes of the acceleration sensor coincides with at least any one of a direction of gravity, a direction opposite to gravity, and a direction perpendicular to gravity which is between the direction of gravity and the direction opposite to gravity. Then, the control unit detects at least either of the rotation angle of the first shaft and the rotation angle of the second shaft when the coordinate axis of the acceleration sensor coincides with at least any one of the direction of gravity, the direction opposite to gravity, and the direction perpendicular to gravity. In other words, the control unit determines a relationship between timing at which the coordinate axis of the acceleration sensor coincides with at least any one of the direction of gravity, the direction opposite to gravity, and the direction perpendicular to gravity and at least one of the rotation angle of the first shaft and the rotation angle of the second shaft at that timing. Then, the control unit arithmetically determines the inclination angle with respect to the horizontal direction on the basis of at least one of the rotation angle of the first shaft and the rotation angle of the second shaft at that timing.

Thus, the control unit of the inclination sensor according to the present invention grasps not the output value from the acceleration sensor itself, but the timing at which the output value from the acceleration sensor indicates at least any one of the maximum value, the minimum value, and the median value between the maximum value and the minimum value, and arithmetically determines the inclination angle with respect to the horizontal direction on the basis of the rotation angle of the shaft of the gimbal mechanism at that timing. As a result, by grasping the timing at which the output value from the acceleration sensor indicates at least any one of the maximum value, the minimum value, and the median value between the maximum value and the minimum value, the control unit is allowed to arithmetically determine the inclination angle with respect to the horizontal direction without acquiring high-accuracy output values from the acceleration sensor. This allows the inclination sensor according to the present invention to suppress drift in the output values from the acceleration sensor and ensure the accuracy of detecting the inclination angle with respect to the horizontal direction. In addition, since there is no need for a tilt sensor capable of high-accuracy detection or the like, it is possible to reduce a size of the inclination sensor.

It is preferable that, in the inclination sensor according to the present invention, the first shaft extends in a front-rear direction, the second shaft extends in a left-right direction, and the coordinate axes include an X-axis coincident with the shaft center of the first shaft and a Y-axis coincident with the shaft center of the second shaft.

For example, there is a case where an acceleration change dependent on control cycles of the first motor and the second motor, an acceleration change under the influence of cogging torques of the first motor and the second motor, or the like is included in the output values from the acceleration sensor.

By contrast, in the inclination sensor according to the present invention, the X-axis among the coordinate axes of the acceleration sensor coincides with the shaft center of the first shaft extending in the front-rear direction. Meanwhile, the Y-axis among the coordinate axes of the accelerator sensor coincides with the shaft center of the second shaft extending in the left-right direction. This allows the inclination sensor according to the present invention to detect the inclination angle with higher accuracy, while suppressing influence dependent on the first motor and the second motor.

It is preferable that, in the inclination sensor according to the present invention, the control unit drives only the first motor to rotate the first shaft at a given speed, and arithmetically determines the inclination angle on the basis of the rotation angle of the first shaft detected by the first encoder when the output value from the Y-axis of the acceleration sensor indicates at least any one of the maximum value, the minimum value, and the median value between the maximum value and the minimum value.

In the inclination sensor according to the present invention, by controlling only the first motor to rotate the first shaft, the control unit can prevent the output value from the X-axis of the acceleration sensor and the output value from the Y-axis of the acceleration sensor from being present in mixed relation and set the output value from the Y-axis of the acceleration sensor higher than the output value from the X-axis of the acceleration sensor. This allows the inclination sensor according to the present invention to detect the inclination angle with higher accuracy. In addition, by rotating the first shaft at the given speed, the control unit can prevent an acceleration other than an acceleration due to gravity from being generated in the acceleration sensor. This allows the inclination sensor according to the present invention to detect the inclination angle with higher accuracy.

It is preferable that, in the inclination sensor according to the present invention, the control unit drives only the second motor to rotate the second shaft at a given speed, and arithmetically determines the inclination angle on the basis of the rotation angle of the second shaft detected by the second encoder when the output value from the X-axis of the acceleration sensor indicates at least any one of the maximum value, the minimum value, and the median value between the maximum value and the minimum value.

In the inclination sensor according to the present invention, by controlling only the second motor to rotate the second shaft, the control unit can prevent the output value from the X-axis of the acceleration sensor and the output value from the Y-axis of the acceleration sensor from being present in mixed relation and set the output value from the X-axis of the acceleration sensor higher than the output value from the Y-axis of the acceleration sensor. This allows the inclination sensor according to the present invention to detect the inclination angle with higher accuracy. In addition, by rotating the second shaft at the given speed, the control unit can prevent an acceleration other than the acceleration due to gravity from being generated in the acceleration sensor. This allows the inclination sensor according to the present invention to detect the inclination angle with higher accuracy.

It is preferable that, in the inclination sensor according to the present invention, when arithmetically determining the inclination angle, the control unit uses, among a plurality of output values output from the acceleration sensor, the output value that has a difference indicating a value of not less than a predetermined value between the maximum value and the minimum value.

In the inclination sensor according to the present invention, even when the coordinate axes of the acceleration sensor are not coincident with the shaft center of the first shaft and the shaft center of the second shaft, it is possible to more reliably separate and discriminate the plurality of output values (e.g., the output value from the X-axis of the acceleration sensor and the output value from the Y-axis of the acceleration sensor) output from the acceleration sensor from each other. This allows the inclination sensor according to the present invention to detect the inclination angle with higher accuracy.

It is preferable that, in the inclination sensor according to the present invention, the control unit arithmetically determines a rotation speed of the first shaft on the basis of the rotation angle of the first shaft detected by the first encoder, arithmetically determines a rotation speed of the second shaft on the basis of the rotation angle of the second shaft detected by the second encoder, and executes an arithmetic operation to remove a component related to a centrifugal force which is included in the output value from the acceleration sensor due to at least one of the rotation speed of the first shaft and the rotation speed of the second shaft.

In the inclination sensor according to the present invention, even when the output values from the acceleration sensor include an acceleration due to the effect of a centrifugal force generated in the acceleration sensor when, e.g., each of the first shaft and the second shaft rotates at the given speed, a centrifugal force generated in the acceleration sensor when the coordinate axes of the acceleration sensor are not coincident with the shaft center of the first shaft and the shaft center of the second shaft, or the like, the control unit arithmetically determines the rotation speed of the first shaft and the rotation speed of the second shaft and executes the arithmetic operation to remove the component related to the centrifugal force which is included in the output value from the acceleration sensor due to at least either of the rotation speed of the first shaft and the rotation speed of the second shaft. This allows the inclination sensor according to the present invention to detect the inclination angle with higher accuracy.

The problem described above is solved by a data acquisition device according to the present invention including: a distance measurement unit that includes a beam emission element that emits a measurement beam, a measurement beam ejection unit that ejects the measurement beam, a beam reception unit that receives a reflected measurement beam, and a beam reception element that receives the reflected measurement beam and generates a beam reception signal, the distance measurement unit measuring a distance to an object to be measured on the basis of the beam reception signal from the beam reception element; any inclination sensor described above; and a control unit that controls the distance measurement unit, the control unit of the inclination sensor being a first control unit, the control unit that controls the distance measurement unit being a second control unit.

In the data acquisition device according to the present invention, the acceleration sensor included in the inclination sensor is disposed in the gimbal mechanism in the state where the origin point of the coordinate axes is coincident with the point of intersection of the shaft center of the first shaft of the gimbal mechanism and the shaft center of the second shaft of the gimbal mechanism. Then, the first control unit drives at least one of the first motor and the second motor, and continuously rotates the acceleration sensor around at least one of the first shaft of the gimbal mechanism and the second shaft of the gimbal mechanism. The first control unit also arithmetically determines the inclination angle with respect to the horizontal direction on the basis of at least one of the rotation angle of the first shaft and the rotation angle of the second shaft which are respectively detected by the first encoder and the second encoder when the output value from the acceleration sensor indicates at least any one of the maximum value, the minimum value, and the median value between the maximum value and the minimum value. In other words, the first control unit continuously rotates the acceleration sensor to thereby continue to detect a time when the output value from the acceleration sensor indicates at least any one of the maximum value, the minimum value, and the median value between the maximum value and the minimum value, i.e., a time when one of coordinate axes of the acceleration sensor coincides with at least any one of the direction of gravity, the direction opposite to gravity, and the direction perpendicular to gravity which is between the direction of gravity and the direction opposite to gravity. Then, the first control unit detects at least one of the rotation angle of the first shaft and the rotation angle of the second shaft when the coordinate axis of the acceleration sensor coincides with at least any one of the direction of gravity, the direction opposite to gravity, and the direction perpendicular to gravity. In other words, the first control unit determines the relationship between timing at which the coordinate axis of the acceleration sensor coincides with at least any one of the direction of gravity, the direction opposite to gravity, and the direction perpendicular to gravity and at least one of the rotation angle of the first shaft and the rotation angle of the second shaft at that timing. Then, the first control unit arithmetically determines the inclination angle with respect to the horizontal direction on the basis of at least either of the rotation angle of the first shaft and the rotation angle of the second shaft at that timing.

Thus, the first control unit of the inclination sensor of the data acquisition device according to the present invention grasps not the output value from the acceleration sensor itself, but the timing at which the output value from the acceleration sensor indicates at least any one of the maximum value, the minimum value, and the median value between the maximum value and the minimum value, and arithmetically determines the inclination angle with respect to the horizontal direction on the basis of the rotation angle of the shaft of the gimbal mechanism at that timing. As a result, by grasping the timing at which the output value from the acceleration sensor indicates at least any one of the maximum value, the minimum value, and the median value between the maximum value and the minimum value, the first control unit is allowed to arithmetically determine the inclination angle with respect to the horizontal direction without acquiring high-accuracy output values from the acceleration sensor. This allows the inclination sensor to suppress drift in the output values from the acceleration sensor and ensure the accuracy of detecting the inclination angle with respect to the horizontal direction. This allows the data acquisition device according to the present invention to acquire higher-accuracy three-dimensional data and image data to which the higher-accuracy three-dimensional data is given. In addition, since there is no need for a tilt sensor capable of high-accuracy detection or the like, it is possible to reduce the size of the inclination sensor. This allows a size of the data acquisition device to be reduced.

### [Advantageous Effects of Invention]

According to the present invention, it is possible to provide an inclination sensor that can suppress drift in output values from an acceleration sensor and ensure accuracy of detecting an inclination angle with respect to a horizontal direction and a data acquisition device including the inclination sensor.

### [Brief Description of Drawings]

[Fig. 1]

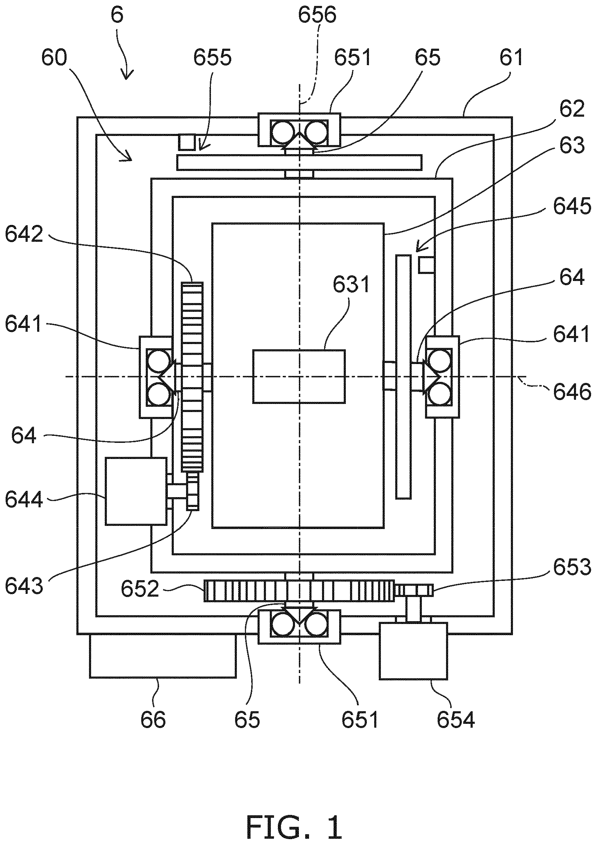

   Fig. 1 is a schematic diagram illustrating an inclination sensor according to an embodiment of the present invention.
[Fig. 2]

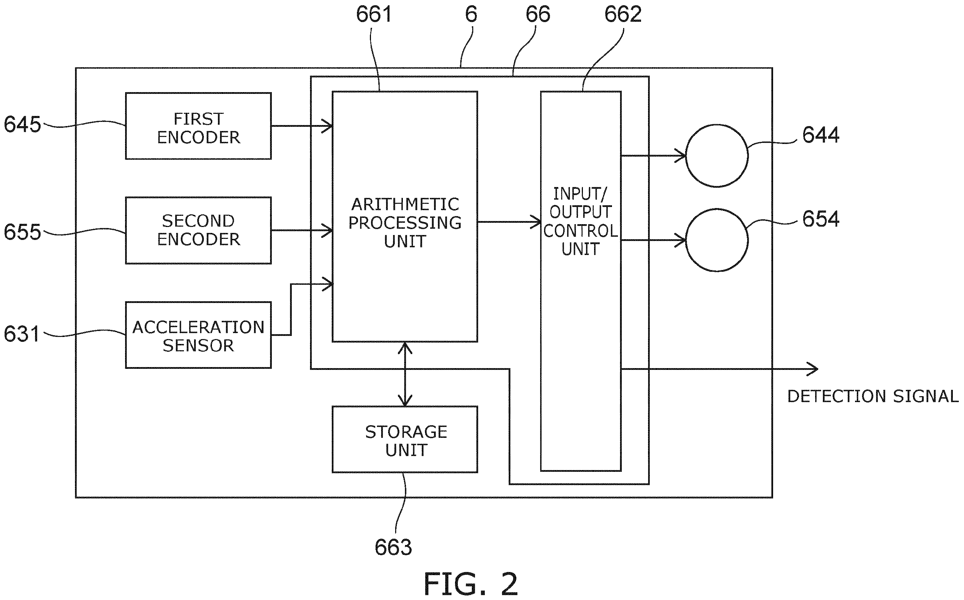

   Fig. 2 is a block diagram illustrating the inclination sensor according to the present embodiment.
[Fig. 3]

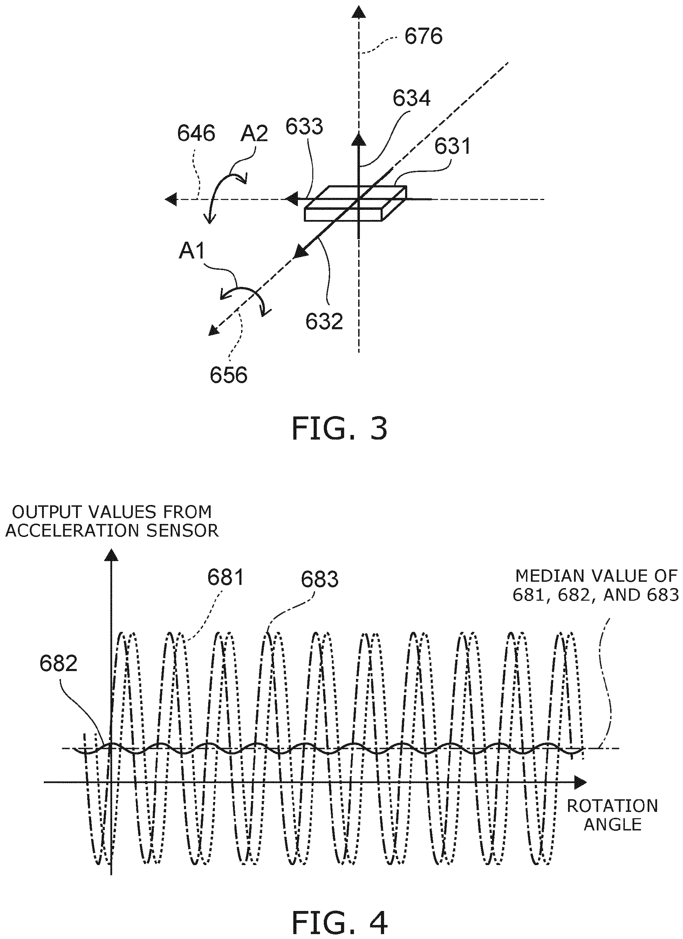

   Fig. 3 is a conceptual view illustrating relationships between coordinate axes of an acceleration sensor and shaft centers of rotation shafts of a gimbal mechanism.
[Fig. 4]
   Fig. 4 is a graph illustrating relationships between a rotation angle of the rotation shaft of the gimbal mechanism and output values from the acceleration sensor.
[Fig. 5]

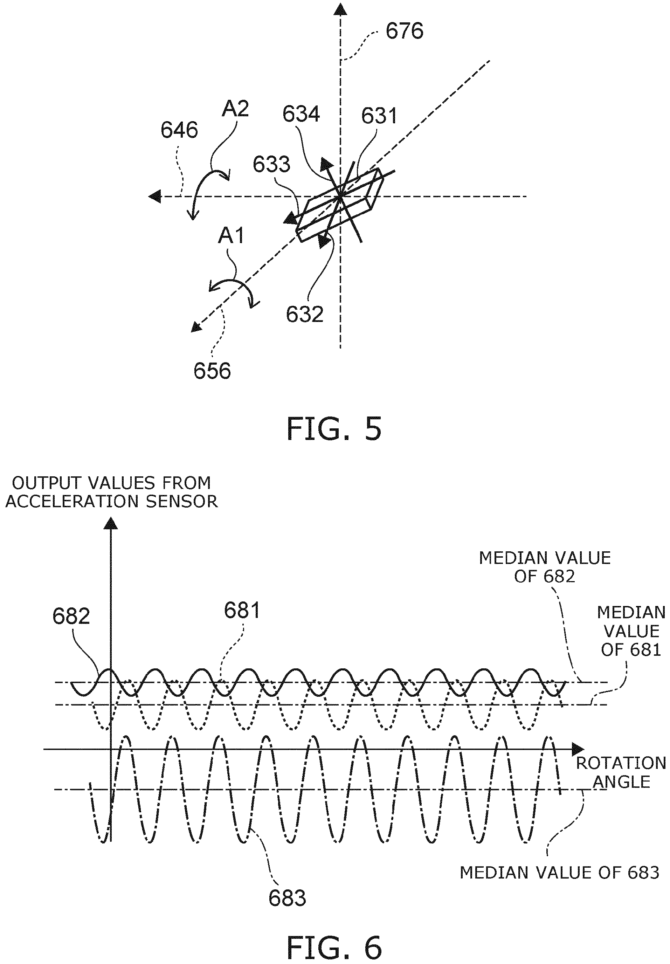

   Fig. 5 is a conceptual view illustrating other relationships between the coordinate axes of the acceleration sensor and the shaft centers of the rotation shafts of the gimbal mechanism.
[Fig. 6]
   Fig. 6 is a graph illustrating other relationships between the rotation angle of the rotation shaft of the gimbal mechanism and the output values from the acceleration sensor.
[Fig. 7]

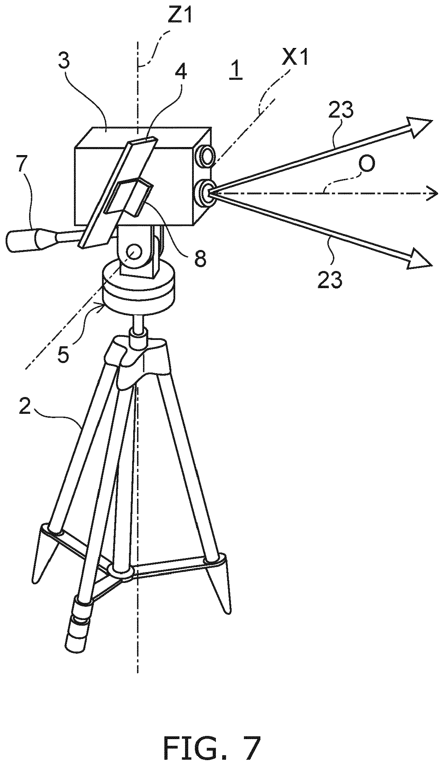

   Fig. 7 is a perspective view illustrating a data acquisition device according to the embodiment of the present invention.
[Fig. 8]

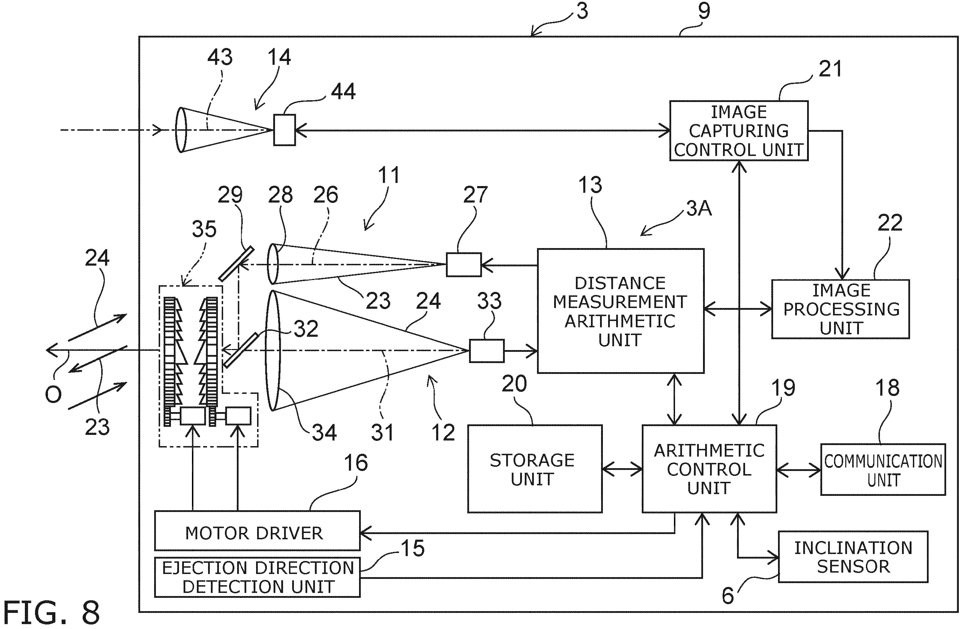

   Fig. 8 is a block diagram illustrating a laser scanner in the present embodiment.
[Fig. 9]

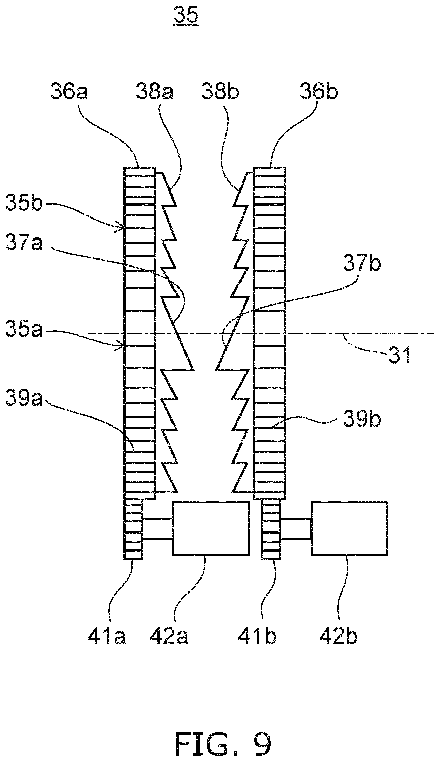

   Fig. 9 is a schematic diagram illustrating a deflection unit in the present embodiment.

### [Description of Embodiments]

The following will describe a preferred embodiment of the present invention in detail with reference to the drawings.

It should be noted that, since the embodiment described below is a preferred specific example of the present invention, a variety of technically preferable limitations are given, but the scope of the present invention is not limited to these aspects unless there is a statement made specifically to limit the present invention in the following description. In addition, in the drawings, the same components are denoted by the same reference signs, and a detailed description thereof will be omitted as appropriate.

Fig. 1 is a schematic diagram illustrating an inclination sensor according to the embodiment of the present invention.

Fig. 2 is a block diagram illustrating the inclination sensor according to the present embodiment.

Note that, in the schematic diagram illustrated in Fig. 1, a direction of gravity and a direction opposite to gravity are directions perpendicular to a surface of a paper sheet illustrating Fig. 1.

An inclination sensor 6 according to the present embodiment includes an outer frame 61 having a rectangular frame shape, an inner frame 62 having a rectangular frame shape and provided inside the outer frame 61, and an inclination detection unit 63 provided inside the inner frame 62.

The inclination detection unit 63 is supported on a left-right shaft 64. The left-right shaft 64 in the present embodiment is an example of a "second shaft" in the present invention. Both end portions of the left-right shaft 64 are rotatably fitted into bearings 641, 641 provided in the inner frame 62. The left-right shaft 64 has a left-right shaft center 646. The inclination detection unit 63 is 360° rotatable in a front-rear direction around the left-right shaft 64.

Front-rear shafts 65, 65 are provided so as to protrude from a rear surface (an upper surface in Fig. 1) and a front surface (a lower surface in Fig. 1) of the inner frame 62. Each of the front-rear shafts 65 in the present embodiment is an example of a "first shaft" in the present invention. The front-rear shafts 65, 65 are rotatably fitted into bearings 651, 651 provided in the outer frame 61. Each of the front-rear shafts 65, 65 has a front-rear shaft center 656 perpendicular to the left-right shaft center 646. The inner frame 62 is 360° rotatable in a left-right direction around each of the front-rear shafts 65, 65.

The inclination detection unit 63 is supported to be rotatable in two axial directions with respect to the outer frame 61. A mechanism of rotatably supporting the inner frame 62 and a mechanism of rotatably supporting the inclination detection unit 63 are included in a gimbal mechanism 60. The inclination detection unit 63 is supported with respect to the outer frame 61 via the gimbal mechanism 60. Since there is no mechanism that restricts rotation of the inner frame 62, the inclination detection unit 63 can freely rotate in all directions with respect to the outer frame 61.

One end portion of the left-right shaft 64 is fitted with a second driven gear 642. The second driven gear 642 is engaged with a second drive gear 643. In addition, in a side surface (a left side surface in Fig. 1) of the inner frame 62, a second motor 644 is provided. An output shaft of the second motor 644 is fitted with the second drive gear 643.

Another end portion of the left-right shaft 64 is provided with a second encoder 645. The second encoder 645 detects a rotation angle of the inclination detection unit 63 with respect to the inner frame 62 in the front-rear direction, i.e., a degree of rotation of the left-right shaft 64. Examples of the second encoder 645 include an increment-type rotary encoder, an absolute-type rotary encoder, and the like.

One (the lower one in Fig. 1) of the front-rear shafts 65, 65 is fitted with a first driven gear 652. The first driven gear 652 is engaged with a first drive gear 653. In addition, in a lower surface of the outer frame 61, a first motor 654 is provided. An output shaft of the first motor 654 is fitted with the first drive gear 653.

Another one (the upper one in Fig. 1) of the front-rear shafts 65, 65 is provided with a first encoder 655. The first encoder 655 detects a rotation angle of the inner frame 62 with respect to the outer frame 61 in the left-right direction, i.e., a degree of rotation of the front-rear shaft 65. Examples of the first encoder 655 include an increment-type rotary encoder, an absolute-type rotary encoder, and the like.

As illustrated in Fig. 2, a control unit 66 has an arithmetic processing unit 661 and an input/output control unit 662. The control unit 66 in the present embodiment is an example of a "control unit of an inclination sensor", i.e., a "first control unit" in the present invention. The second encoder 645 and the first encoder 655 are electrically connected to the arithmetic processing unit 661.

The inclination detection unit 63 has an acceleration sensor 631. The acceleration sensor 631 is electrically connected to the arithmetic processing unit 661.

Referring to Fig. 2, a further description will be given of the inclination sensor 6.

The inclination sensor 6 includes the second encoder 645, the first encoder 655, the acceleration sensor 631, the second motor 644, the first motor 654, a storage unit 663, and the control unit 66. The control unit 66 has the arithmetic processing unit 661 and the input/output control unit 662.

The storage unit 73 stores programs such as an arithmetic program for detecting an inclination angle and data items such as an arithmetic data item.

The input/output control unit 662 drives the second motor 644 and the first motor 654 on the basis of a control instruction output from the arithmetic processing unit 661 and outputs an inclination detection result resulting from an arithmetic operation by the arithmetic processing unit 661. The second motor 644 rotates the left-right shaft 64 via the second drive gear 643 and the second driven gear 642. The first motor 654 rotates the front-rear shaft 65 via the first drive gear 653 and the first driven gear 652.

The second encoder 645 detects a rotation angle of the second motor 644, i.e., a rotation angle of the left-right shaft 64 rotated by the second motor 644. The first encoder 655 detects a rotation angle of the first motor 654, i.e., a rotation angle of the front-rear shaft 65 rotated by the first motor 654.

The acceleration sensor 631 can detect an inclination change with high responsiveness. The acceleration sensor 631 is capable of individually detecting respective inclinations in two axial directions which are the rotation direction (inclination direction) detected by the second encoder 645 and the rotation direction (inclination direction) detected by the first encoder 655.

The arithmetic processing unit 661 arithmetically determines the inclination angles and the inclination directions on the basis of a detection result from the acceleration sensor 631, and arithmetically determines a rotation angle of the second encoder 645 and a rotation angle of the first encoder 655 which correspond to the inclination angles and inclination directions arithmetically determined.

The inclination sensor 6 is set such that, when the outer frame 61 is horizontally placed, the acceleration sensor 631 detects the horizontal, and is further set such that each of an output from the second encoder 645 and an output from the first encoder 655 represents a reference position (rotation angle 0°).

A description will be given below of operation of the inclination sensor 6.

Fig. 3 is a conceptual view illustrating relationships between coordinate axes of the acceleration sensor and the shaft centers of the rotation shafts of the gimbal mechanism.

Fig. 4 is a graph illustrating relationships between the rotation angle of the rotation shaft of the gimbal mechanism and an output value from the acceleration sensor.

First, the relationships between the coordinate axes of the acceleration sensor 631 and the shaft centers (the left-right shaft center 646 and the front-rear shaft center 656) of the rotation shafts (the left-right shaft 64 and the front-rear shaft 65) of the gimbal mechanism 60 will be described with reference to Fig. 3.

The coordinate axes of the acceleration sensor 631 include an X-axis 632, a Y-axis 633, and a Z-axis 634. As illustrated in Fig. 3, the acceleration sensor 631 is disposed in the gimbal mechanism 60 having a mechanism of rotatably supporting the inner frame 62 and a mechanism of rotatably supporting the inclination detection unit 63 in a state where an origin point of the coordinate axes of the acceleration sensor 631 is coincident with a point of intersection of the left-right shaft center 646 of the left-right shaft 64 and the front-rear shaft center 656 of the front-rear shaft 65. This allows the acceleration sensor 631 to rotate around the point of intersection (i.e., the origin point of the gimbal mechanism 60) of the left-right shaft center 646 of the left-right shaft 64 and the front-rear shaft center 656 of the front-rear shaft 65. The X-axis 632 is coincident with the front-rear shaft center 656 of the front-rear shaft 65. The Y-axis 633 is coincident with the left-right shaft center 646 of the left-right shaft 64. The Z-axis 634 is coincident with a vertical shaft center 676.

The control unit 66 (specifically, the input/output control unit 662) drives at least one of the second motor 644 and the first motor 654 to continuously rotate the acceleration sensor 631 around at least one of the left-right shaft 64 and the front-rear shaft 65. In other words, as indicated by an arrow A2 and an arrow A1 each illustrated in Fig. 3, the control unit 66 drives the second motor 644 and the first motor 654 to continuously rotate the acceleration sensor 631 around the left-right shaft 64 and the front-rear shaft 65. Alternatively, as indicated by the arrow A2 illustrated in Fig. 3, the control unit 66 drives only the second motor 644 to continuously rotate the acceleration sensor 631 only around the left-right shaft 64 or, as indicated by the arrow A1 illustrated in Fig. 3, the control unit 66 drives only the first motor 654 to continuously rotate the acceleration sensor 631 only around the front-rear shaft 65.

Then, the control unit 66 (specifically, the arithmetic processing unit 661) arithmetically determines the inclination angle with respect to the horizontal direction on the basis of at least one of the rotation angle of the left-right shaft 64 and the rotation angle of the front-rear shaft 65 which are respectively detected by the second encoder 645 and the first encoder 655 when one of the output values from the acceleration sensor 631 indicates at least any one of a maximum value, a minimum value, and a median value between the maximum value and the minimum value.

In other words, the control unit 66 continuously rotates the acceleration sensor 631 to thereby continue to detect a time when the output value from the acceleration sensor 631 indicates any of the maximum value, the minimum value, and the median value between the maximum value and the minimum value, i.e., a time when one of the coordinate axes of the acceleration sensor 631 coincides with any of the direction of gravity, the direction opposite to gravity, and a direction perpendicular to gravity. Then, the control unit 66 detects at least one of the rotation angle of the left-right shaft 64 and the rotation angle of the front-rear shaft 65 when the coordinate axis of the acceleration sensor 631 coincides with any of the direction of gravity, the direction opposite to gravity, and the direction perpendicular to gravity. In other words, the control unit 66 determines a relationship between timing at which the coordinate axis of the acceleration sensor 631 coincides with any of the direction of gravity, the direction opposite to gravity, and the direction perpendicular to gravity and at least one of the rotation angle of the left-right shaft 64 and the rotation angle of the front-rear shaft 65 at that timing. Then, the control unit 66 arithmetically determines the inclination angle with respect to the horizontal direction on the basis of at least one of the rotation angle of the left-right shaft 64 and the rotation angle of the front-rear shaft 65 at that timing.

Next, the operation of the inclination sensor 6 according to the present embodiment will be further described with reference to Fig. 4.

Note that, for the sake of convenience, the description of Fig. 4 uses, as an example, a case where the control unit 66 drives only the second motor 644 to continuously rotate the acceleration sensor 631 only around the left-right shaft 64.

When the control unit 66 drives only the second motor 644 to continuously rotate the acceleration sensor 631 only around the left-right shaft 64, the relationships between the output values from the acceleration sensor 631 and the rotation angle of the left-right shaft 64 (rotation angle of the second motor 644) are exactly as in the graph illustrated in Fig. 4.

In other words, since the acceleration sensor 631 rotates only around the left-right shaft 64, even when the acceleration sensor 631 continuously rotates, the Y-axis 633 of the acceleration sensor 631 remains substantially perpendicular to the direction of gravity. Meanwhile, since the acceleration sensor 631 rotates only around the left-right shaft 64, when the acceleration sensor 631 continuously rotates, each of the X-axis 632 of the acceleration sensor 631 and the Z-axis 634 of the acceleration sensor 631 becomes substantially parallel to the direction of gravity, becomes substantially perpendicular to the direction of gravity, and becomes substantially parallel to the direction opposite to gravity at fixed cycle periods. Accordingly, as illustrated in Fig. 4, an amplitude of a Y-axis output value 682 from the acceleration sensor 631 is smaller than each of an amplitude of an X-axis output value 681 from the acceleration sensor 631 and an amplitude of a Z-axis output value 683 from the acceleration sensor 631. In other words, the amplitude of the X-axis output value 681 from the acceleration sensor 631 and the amplitude of the Z-axis output value 683 from the acceleration sensor 631 are larger than the amplitude of the Y-axis output value 682 from the acceleration sensor 631.

The X-axis output value 681 is maximized when a positive direction of the X-axis 632 becomes substantially parallel to the direction of gravity, is minimized when the positive direction of the X-axis 632 becomes substantially parallel to the direction opposite to gravity, and reaches the median value when the positive direction of the X-axis 632 is substantially perpendicular to the direction of gravity. In other words, the X-axis output value 681 is maximized when the positive direction of the X-axis 632 coincides with the direction of gravity, is minimized when the positive direction of the X-axis 632 coincides with the direction opposite to gravity, and reaches the median value when the positive direction of the X-axis 632 coincides with the direction perpendicular to gravity. The same applies also to the Y-axis output value 682 and to the Z-axis output value 683.

When the acceleration sensor is affected by a change in environment such as a temperature, an atmospheric pressure, a humidity, or a magnetic field, drift may occur in the output values from the acceleration sensor. Otherwise, when the acceleration sensor continues to be affected by the change in environment, the output values from the acceleration sensor change with time, and drift may occur in the output values from the acceleration sensor.

By contrast, in the example of the graph illustrated in Fig. 4, the control unit 66 (specifically, the input/output control unit 662) of the inclination sensor 6 according to the present embodiment drives only the second motor 644 to continuously rotate the acceleration sensor 631 only around the left-right shaft 64. Then, the control unit 66 (specifically, the arithmetic processing unit 661) arithmetically determines the inclination angle with respect to the horizontal direction on the basis of the rotation angle of the left-right shaft 64 detected by the second encoder 645 when the X-axis output value 681 indicates at least any one of the maximum value, the minimum value, and the median value between the maximum value and the minimum value.

In other words, the control unit 66 continuously rotates the acceleration sensor 631 around the left-right shaft 64 to thereby continue to detect a time when the X-axis output value 681 indicates any of the maximum value, the minimum value, and the median value between the maximum value and the minimum value, i.e., a time when the X-axis 632 of the acceleration sensor 631 coincides with any of the direction of gravity, the direction opposite to gravity, and the direction perpendicular to gravity. Then, the control unit 66 detects the rotation angle of the left-right shaft 64 when the X-axis 635 of the acceleration sensor 631 coincides with any of the direction of gravity, the direction opposite to gravity, and the direction perpendicular to gravity. In other words, the control unit 66 determines a relationship between timing at which the X-axis 632 of the acceleration sensor 631 coincides with any of the direction of gravity, the direction opposite to gravity, and the direction perpendicular to gravity and the rotation angle of the left-right shaft 64 at that timing. Then, the control unit 66 arithmetically determines the inclination angle with respect to the horizontal direction on the basis of the rotation angle of the left-right shaft 64 at that timing.

Thus, the control unit 66 of the inclination sensor 6 according to the present embodiment can grasp the rotation angle of the left-right shaft 64 (rotation angle of the second motor 644) when the X-axis output value 681 indicates any of the maximum value, the minimum value, and the median value between the maximum value and the minimum value, and can arithmetically determine the inclination angle with respect to the horizontal direction on the basis of the rotation angle of the left-right shaft 64 (rotation angle of the second motor 644) at that time.

In the inclination sensor 6 according to the present embodiment, the control unit 66 grasps not the output values from the acceleration sensor 631 themselves, but the timing at which one of the output values from the acceleration sensor 631 indicates any of the maximum value, the minimum value, and the median value between the maximum value and the minimum value, and arithmetically determines the inclination angle with respect to the horizontal direction on the basis of the rotation angle of the shaft (at least one of the left-right shaft 64 and the front-rear shaft 65) of the gimbal mechanism 60 at that timing. Thus, the control unit 66 can arithmetically determine the inclination angle with respect to the horizontal direction by grasping the timing at which the output value from the acceleration sensor 631 indicates any of the maximum value, the minimum value, and the median value between the maximum value and the minimum value, instead of acquiring high-accuracy output values from the acceleration sensor 631. This allows the inclination sensor 6 according to the present embodiment to suppress drift in the output values from the acceleration sensor 631 and ensure accuracy of detecting the inclination angle with respect to the horizontal direction. In addition, since there is no need for a tilt sensor capable of high-accuracy detection or the like, it is possible to reduce a size of the inclination sensor 6.

There is a case where an acceleration change dependent on control cycle periods of the second motor 644 and the first motor 654, an acceleration change due to the effect of cogging torques of the second motor 644 and the first motor 654, or the like is included in the output values from the acceleration sensor 631.

By contrast, in the inclination sensor 6 according to the present embodiment, the Y-axis 633 of the acceleration sensor 631 coincides with the left-right shaft center 646 of the left-right shaft 64, while the X-axis 632 of the acceleration sensor coincides with the front-rear shaft center 656 of the front-rear shaft 65. This allows the inclination sensor 6 according to the present embodiment to detect the inclination angle with higher accuracy, while preventing influence dependent on the second motor 644 and the first motor 654.

When driving only the second motor 644 to rotate the left-right shaft 64, the control unit 66 can prevent the Y-axis output value 682 from the acceleration sensor 631 and the X-axis output value 681 from the acceleration sensor from being present in mixed relation and set the X-axis output value 681 from the acceleration sensor 631 higher than the Y-axis output value 682 from the acceleration sensor 631. This allows the inclination sensor 6 according to the present embodiment to detect the inclination angle with higher accuracy.

The control unit 66 may also control the driving of the second motor 644 and rotate the left-right shaft 64 at a given speed or rotate the left-right shaft 64 at a variable speed. When rotating the left-right shaft 64 at a given speed, the control unit 66 can prevent an acceleration other than an acceleration due to gravity from being generated in the acceleration sensor 631. In addition, the control unit 66 can fit the X-axis output value 681 to a sine wave, determine a phase with reduced noise, and calculate the inclination angle corresponding to the phase. As a result, the inclination sensor 6 according to the present embodiment can detect the inclination angle with higher accuracy. Note that the control unit 66 sets a rotation speed of the left-right shaft 64 to, e.g., about 20 rps or lower. However, the rotation speed of the left-right shaft 64 is not limited to 20 rps or lower.

In addition, the control unit 66 arithmetically determines the rotation speed of the left-right shaft on the basis of the rotation angle of the left-right shaft 64 detected by the second encoder 645, and executes an arithmetic operation to remove a component related to a centrifugal force that is included in the output values from the acceleration sensor 631 by using the rotation speed of the left-right shaft 64.

As a result, even in a case where an acceleration due to the effect of a centrifugal force generated in the acceleration sensor 631 when, e.g., the left-right shaft 64 rotates at a given speed, a centrifugal force generated in the acceleration sensor 631 when the coordinate axes of the acceleration sensor 631 are not coincident with the left-right shaft center 646 of the left-right shaft 64 and the front-rear shaft center 656 of the front-rear shaft 65, or the like is included in the output values from the acceleration sensor 631, the control unit 66 can remove the component related to the centrifugal force which is included in the output values from the acceleration sensor 631. This allows the inclination sensor 6 according to the present embodiment to detect the inclination angle with higher accuracy.

Note that, as described above, the control unit 66 may also drive only the first motor 654 to continuously rotate the acceleration sensor 631 only around the front-rear shaft 65. In this case, the control unit 66 can prevent the Y-axis output value 682 from the acceleration sensor 631 and the X-axis output value 681 from the acceleration sensor from being present in mixed relation and set the Y-axis output value 682 from the acceleration sensor 631 higher than the X-axis output value 681 from the acceleration sensor 631. This allows the inclination sensor 6 according to the present embodiment to detect the inclination angle with higher accuracy. In addition, for other effects also, the same effects as the effects described above for the case where the control unit 66 drives only the second motor 644 to continuously rotate the acceleration sensor 631 only around the left-right shaft 64 can be obtained.

Alternatively, as described above, the control unit 66 may also drive the second motor 644 and the first motor 654 to continuously rotate the acceleration sensor 631 around the left-right shaft 64 and the front-rear shaft 65. In this case, to prevent the Y-axis output value 682 from the acceleration sensor 631 and the X-axis output value 681 from the acceleration sensor from being present in mixed relation, i.e., to more reliably separate and discriminate the Y-axis output value 682 from the acceleration sensor 631 from the X-axis output value 681 from the acceleration sensor, the control unit 66 preferably sets the rotation speed of the left-right shaft 64 and the rotation speed of the front-rear shaft 65 different from each other. For example, the control unit 66 sets the rotation speed of one of the left-right shaft 64 and the front-rear shaft 65 to be not less than twice and not more than 10 times the rotation speed of the other of the left-right shaft 64 and the front-rear shaft 65. This can more reliably prevent the Y-axis output value 682 from the acceleration sensor 631 and the X-axis output value 681 from the acceleration sensor from being present in mixed relation and more reliably separate and discriminate the Y-axis output value 682 from the acceleration sensor 631 from the X-axis output value 681 from the acceleration sensor. Note that a ratio of the rotation speed of one of the left-right shaft 64 and the front-rear shaft 65 to the rotation speed of the other thereof is not limited to a value of not less 2 and not more than 10.

Next, a case where the X-axis 632 is not coincident with the front-rear shaft center 656 of the front-rear shaft 65, the Y-axis 633 is not coincident with the left-right shaft center 646 of the left-right shaft 64, and the Z-axis 634 is not coincident with the vertical shaft center 676 will be described with reference to Figs. 5 and 6.

Fig. 5 is a conceptual view illustrating other relationships between the coordinate axes of the acceleration sensor and the shaft centers of the rotation shafts of the gimbal mechanism.

Fig. 6 is a graph illustrating other relationships between the rotation angle of the rotation shaft of the gimbal mechanism and the output values from the acceleration sensor.

In the example illustrated in Fig. 5, the acceleration sensor 631 is disposed in the gimbal mechanism 60 having a mechanism of rotatably supporting the inner frame 62 and a mechanism of rotatably supporting the inclination detection unit 63 in a state where the origin point of the coordinate axes of the acceleration sensor 631 is coincident with a point of intersection of the left-right shaft center 646 of the left-right shaft 64 and the front-rear shaft center 656 of the front-rear shaft 65. This allows the acceleration sensor 631 to rotate around the point of intersection (i.e., the origin point of the gimbal mechanism 60) of the left-right shaft center 646 of the left-right shaft 64 and the front-rear shaft center 656 of the front-rear shaft 65. However, the X-axis 632 is not coincident with the front-rear shaft center 656 of the front-rear shaft 65. The Y-axis 633 is not coincident with the left-right shaft center 646 of the left-right shaft 64. The Z-axis 634 is not coincident with the vertical shaft center 676. In this respect, the example illustrated in Fig. 5 is different from the example described above with reference to Fig. 3.

In the description of Fig. 6, in the same manner as in the description of Fig. 4, a case where the control unit 66 drives only the second motor 644 to continuously rotate the acceleration sensor 631 only around the left-right shaft 64 is used as an example. When the control unit 66 drives only the second motor 644 to continuously rotate the acceleration sensor 631 only around the left-right shaft 64, the relationships between the output values from the acceleration sensor 631 and the rotation angle of the left-right shaft 64 (rotation angle of the second motor 644) are exactly as in the graph illustrated in Fig. 6.

In other words, since the X-axis 632 is not coincident with the front-rear shaft center 656 of the front-rear shaft 65, the Y-axis 633 is not coincident with the left-right shaft center 646 of the left-right shaft 64, and the Z-axis 634 is not coincident with the vertical shaft center 676, when the acceleration sensor 631 rotates only around the left-right shaft 64, differences between the amplitude of the Y-axis output value 682 from the acceleration sensor 631, the amplitude of the X-axis output value 681 from the acceleration sensor 631, and the amplitude of the Z-axis output value 683 from the acceleration sensor 631 are smaller than those in the graph illustrated in Fig. 4.

By contrast, in the inclination sensor 6 according to the present embodiment, to prevent the Y-axis output value 682 from the acceleration sensor 631 and the X-axis output value 681 from the acceleration sensor from being present in mixed relation, i.e., to more reliably separate and discriminate the Y-axis output value 682 from the acceleration sensor 631 from the X-axis output value 681 from the acceleration sensor, the control unit 66 uses, when arithmetically determining the inclination angle, the output value having the maximum value and the minimum value a difference between which is not less than a predetermined value from among the plurality of output values (the X-axis output value 681, the Y-axis output value 682, and the Z-axis output value 683) output from the acceleration sensor 631.

For example, in the example illustrated in Fig. 6, when the predetermined value of the difference between the maximum value and the minimum value is larger than the difference between the maximum value and the minimum value of the Y-axis output value 682 and smaller than the difference between the maximum value and the minimum value of the X-axis output value 681, the control unit 66 uses, when arithmetically determining the inclination angle, at least one of the X-axis output value 681 and the Z-axis output value 683.

As a result, even when the X-axis 632 is not coincident with the front-rear shaft center 656 of the front-rear shaft 65, the Y-axis 633 is not coincident with the left-right shaft center 646 of the left-right shaft 64, and the Z-axis 634 is not coincident with the vertical shaft center 676, it is possible to more reliably separate and discriminate the X-axis output value 681, the Y-axis output value 682, and the Z-axis output value 683 which are output from the acceleration sensor 631 from each other. This allows the inclination sensor 6 according to the present embodiment to detect the inclination angle with higher accuracy. In addition, for other effects also, the same effects as the effects described above with reference to Figs. 3 and 4 can be obtained.

Next, a description will be given of a data acquisition device according to an embodiment of the present invention.

Note that, when components of an inclination sensor included in the data acquisition device according to the present embodiment are the same as the components of the inclination sensor according to the present embodiment described above with reference to Figs. 1 to 6, a repeated description thereof is omitted as appropriate, and a description will be given with emphasis on differences between the components.

Fig. 7 is a perspective view illustrating the data acquisition device according to the embodiment of the present invention.

Examples of the data acquisition device according to the present embodiment include a total station that measures three-dimensional coordinates (three-dimensional data) at a measurement point with high accuracy, a laser scanner unit that applies pulse laser beams as distance measurement beams, while rotating, to perform distance measurement with each of the pulse laser beams and acquire point group data, a laser irradiation device (pipe laser) that sets a reference line when civil engineering work or the like is to be performed, a rotating laser, and the like. In the description of the present embodiment, as an example of the data acquisition device, the laser scanner unit is used.

A data surveying system 1 illustrated in Fig. 7 is a laser scanner unit, which is an example of the "data acquisition device" in the present invention. A reference optical axis O illustrated in Fig. 7 indicates an optical axis in a state where there is no deflection by a deflection unit 35 described later. The optical axis in the state where there is no deflection by the deflection unit 35 is a straight optical axis extending through a center of the deflection unit 35, which corresponds to the reference optical axis.

The surveying system 1 mainly includes a tripod 2 serving as a supporting device, a laser scanner 3, an operation device 4, and a mounting stand unit 5. The inclination sensor 6 described above with reference to Figs. 1 to 6 is provided inside the laser scanner 3. The mounting stand unit 5 is attached to an upper end of the tripod 2. The laser scanner 3 is mounted on the mounting stand unit 5 to be laterally rotatable and vertically rotatable. Thus, the inclination sensor 6 according to the present embodiment is provided inside the laser scanner 3 disposed in a rest state by using the tripod 2 and the mounting stand unit 5.

The mounting stand unit 5 is provided with a laterally extending lever 7. By operating the lever 7, a worker can rotate the laser scanner 3 in an up/down direction (vertical direction) or in a lateral direction (horizontal direction), and can also fix the laser scanner 3 in a required attitude.

The laser scanner 3 has a distance measurement unit 3A (see Fig. 8) and the inclination sensor 6 (see Fig. 8) which are embedded therein. The distance measurement unit 3A ejects a measurement beam 23 toward an object to be measured or a measurement range and receives a reflected measurement beam 24 (see Fig. 8) to perform measurement. The inclination sensor 6 is capable of accurately detecting the attitude of the laser scanner 3 with respect to the horizontal (or vertical) direction. For example, the inclination sensor 6 detects an inclination angle of the laser scanner 3 with respect to the horizontal direction.

The operation device 4 has a communication function of performing communication with the laser scanner 3 via a required wired/wireless means. The operation device 4 is detachable from the laser scanner 3 via an attachment 8. The worker can hold the detached operation device 4 with one hand and operate the operation device 4, and can also remotely operate the laser scanner 3 by using the operation device 4.

The laser scanner 3 further transmits an image, a measured state, a measurement result, or the like to the operation device 4. The image, the measured state, the measurement result, or the like transmitted from the laser scanner 3 is stored in the operation device 4 and displayed on a display unit (not shown) of the operation device 4. For example, the operation device 4 may be a smartphone.

Fig. 8 is a block diagram illustrating the laser scanner in the present embodiment.

Fig. 9 is a schematic view illustrating the deflection unit in the present embodiment.

The laser scanner 3 includes a measurement beam ejection unit 11, a beam reception unit 12, a distance measurement arithmetic unit 13, an image capturing unit 14, an ejection direction detection unit 15, a motor driver 16, an inclination sensor 6, a communication unit 18, an arithmetic control unit 19, a storage unit 20, an image capturing control unit 21, and an image processing unit 22. These are integrally contained in a casing 9. Note that the measurement beam ejection unit 11, the beam reception unit 12, the distance measurement arithmetic unit 13, and the like are included in at least a portion of the distance measurement unit 3A. Also, the arithmetic control unit 19 in the present embodiment is an example of a "control unit that controls a distance measurement unit", i.e., a "second control unit" in the present embodiment.

The measurement beam ejection unit 11 has an ejection optical axis 26. On the ejection optical axis 26, a beam emission element 27 such as, e.g., a laser diode (LD) is provided. Additionally, on the ejection optical axis 26, a projector lens 28 is also provided. By a first reflecting mirror 29 provided as a deflection optical member further provided on the ejection optical axis 26 and by a second reflecting mirror 32 provided as the deflection optical member on a beam reception optical axis 31, the ejection optical axis 26 is deflected so as to coincide with the beam reception optical axis 31. The first reflecting mirror 29 and the second reflecting mirror 32 are included in at least a portion of an ejection optical axis deflection unit. The beam emission element 27 emits a pulse laser beam. The measurement beam ejection unit 11 ejects the pulse laser beam emitted from the beam emission element 27 as the measurement beam 23.

A description will be given of the beam reception unit 12. On the beam reception unit 12, the reflected measurement beam 24 from the object to be measured (i.e., the measurement point) is incident. The beam reception unit 12 has the beam reception optical axis 31. As described above, with the beam reception optical axis 31, the ejection optical axis 26 deflected by the first reflecting mirror 29 and the second reflecting mirror 32 coincides.

On the deflected ejection optical axis 26, i.e., on the beam reception optical axis 31, the deflection unit 35 (described later) is disposed. A straight optical axis extending through the center of the deflection unit 35 serves as the reference optical axis O. The reference optical axis O coincides with the ejection optical axis 26 or the beam reception optical axis 31 when there is no deflection by the deflection unit 35.

On the beam reception optical axis 31 on which the beam transmitted by the deflection unit 35 is incident, an imaging lens 34 and a beam reception element 33 such as, e.g., a photodiode (PD) are provided. The imaging lens 34 images the reflected measurement beam 24 onto the beam reception element 33. The beam reception element 33 receives the reflected measurement beam 24 and generates a beam reception signal. The beam reception signal is input to the distance measurement arithmetic unit 13. The distance measurement arithmetic unit 13 measures a distance to the measurement point on the basis of the beam reception signal.

Referring to Fig. 9, a description will be given of the deflection unit 35. The deflection unit 35 has a pair of optical prisms 36a and 36b. The optical prisms 36a and 36b are each in the form of a disc, are placed on the beam reception optical axis 31 to be perpendicular thereto and disposed to overlap each other in parallel relation. As each of the optical prisms 36a and 36b, a Risley prism is used preferably to reduce a size of the device. A center portion of the deflection unit 35 serves as a measurement beam deflection unit 35a corresponding to a first deflection unit by which the measurement beam 23 is transmitted and ejected. The portion of the deflection unit 35 other than the center portion serves as a reflected measurement beam deflection unit 35b corresponding to a second deflection unit by which the reflected measurement beam 24 is transmitted and incident.

The Risley prisms used as the optical prisms 36a and 36b have prism elements 37a and 37b formed parallel to each other and numerous prism elements 38a and 38b, and exhibit disc shapes. The optical prisms 36a and 36b, the individual prism elements 37a and 37b, and the prism elements 38a and 38b have the same optical properties.

The prism elements 37a and 37b are included in the measurement beam deflection unit 35a. The prism elements 38a and 38b are included in the reflected measurement beam deflection unit 35b. The Risley prisms may be produced from optical glass or may also be mold-formed from an optical plastic material. By mold-forming the Risley prisms from the optical plastic material, low-cost Risley prisms can be produced.

The optical prisms 36a and 36b are disposed to be independently and individually rotatable around the beam reception optical axis 31. The optical prisms 36a and 36b have respective rotation directions, rotation amounts, and rotation speeds independently controlled to deflect the measurement beam 23 passing through the ejection optical axis 26 in an optional direction and deflect the reflected measurement beam 24 received thereby to be parallel to the beam reception optical axis 31. Each of outer shapes of the optical prisms 36a and 36b is a circle having the beam reception optical axis 31 at a center thereof. Diameters of the optical prisms 36a and 36b are set to allow the optical prisms 36a and 36b to acquire sufficient quantities of beams in consideration of spreading of the reflected measurement beam 24.

Around an outer periphery of the optical prism 36a, a ring gear 39a is provided to be fitted therein. Around an outer periphery of the optical prism 36b, a ring gear 39b is provided to be fitted therein. With the ring gear 39a, a drive gear 41a is engaged. The drive gear 41a is fixed to an output shaft of a motor 42a. Likewise, with the ring gear 39b, the drive gear 41b is engaged. The drive gear 41b is fixed to an output shaft of a motor 42b. The motors 42a and 42b are electrically connected to the motor driver 16.

As each of the motors 42a and 42b, a motor capable of detecting a rotation angle or a motor that rotates in correspondence to a drive input value, e.g., a pulse motor is used. Alternatively, a rotation amount of each of the motors may also be detected using a rotation angle detector that detects a rotation amount (rotation angle) of the motor such as, e.g., an encoder. The respective rotation amounts of the motors 42a and 42b are detected, and the motors 42a and 42b are individually controlled by the motor driver 16. Note that respective encoders attached directly to the ring gears 39a and 39b may also directly detect the rotation angles of the ring gears 39a and 39b.

The drive gears 41a and 41b and the motors 42a and 42b are provided at positions that do not interfere with the measurement beam ejection unit 11, e.g., under the ring gears 39a and 39b.

The projector lens 28, the first reflecting mirror 29, the second reflecting mirror 32, the measurement beam deflection unit 35a, and the like are included in at least a portion of a projection optical system. The reflected measurement beam deflection unit 35b, the imaging lens 34, and the like are included in at least a portion of a beam reception optical system.

The distance measurement arithmetic unit 13 controls the beam emission element 27 to generate the pulse laser beam as the measurement beam 23. The measurement beam 23 is deflected by the prism elements 37a and 37b (the measurement beam deflection unit 35a) so as to travel toward the measurement point.

The reflected measurement beam 24 reflected from the object to be measured is incident via the prism elements 38a and 38b (the reflected measurement beam deflection unit 35b) and the imaging lens 34 to be received by the beam reception element 33. The beam reception element 33 transmits the beam reception signal to the distance measurement arithmetic unit 13. The distance measurement arithmetic unit 13 measures a distance to the measurement point (point irradiated with the measurement beam 23) with each one of the pulse beams on the basis of the beam reception signal from the beam reception element 33. Distance measurement data is stored in the storage unit 20. The distance measurement arithmetic unit 13 performs distance measurement with each one of the pulse beams, while performing scanning with the measurement beam 23, to be able to acquire the distance measurement data about each of the measurement points.

The ejection direction detection unit 15 counts drive pulses input to the motors 42a and 42b to detect rotation angles of the motors 42a and 42b. Alternatively, the ejection direction detection unit 15 detects the rotation angles of the motors 42a and 42b on the basis of a signal from the encoder. The ejection direction detection unit 15 also arithmetically determines rotation positions of the optical prisms 36a and 36b on the basis of the rotation angles of the motors 42a and 42b.

The ejection direction detection unit 15 further arithmetically determines an ejection direction of the measurement beam 23 on the basis of refractive indices and the rotation positions of the optical prisms 36a and 36b and outputs a result of the arithmetic determination to the arithmetic control unit 19. The arithmetic control unit 19 arithmetically determines, from the ejection direction of the measurement beam 23, a horizontal angle θ1 and a vertical angle θ2 of the measurement point with respect to the reference optical axis O and associates, for each one of the measurement points, the horizontal angle θ1 and the vertical angle θ2 with the distance measurement data to be able to obtain three-dimensional data about the measurement point.

A description will be given of the inclination sensor 6. The inclination sensor 6 is fixed to the casing 9 or fixed to a structure member to be integrated with the laser scanner 3. As described above, to the inclination sensor 6, the acceleration sensor 631 is attached via the gimbal mechanism 60. The acceleration sensor 631 is 360° rotatable around two axes perpendicular to each other.

When the acceleration sensor 631 is inclined (when the laser scanner 3 is inclined), an inclination angle and an inclination direction of the laser scanner 3 are detected on the basis of a result of the detection by the acceleration sensor 631. This is exactly the same as described above with reference to Figs. 1 to 6. Since the acceleration sensor 631 is 360° rotatable around the two axes, no matter which attitude the inclination sensor 6 takes (e.g., even when the inclination sensor 6 is upside down), the attitude can be detected in all directions.

The arithmetic control unit 19 controls the motors on the basis of the signal from the acceleration sensor 631 even when an inclination variation is large or an inclination change is rapid. The arithmetic control unit 19 also controls the motors on the basis of the signal from the acceleration sensor 631 even when the inclination variation is small or the inclination change is slow.

The image capturing unit 14 is a camera having an image capturing optical axis 43 parallel to the reference optical axis O of the laser scanner 3 and having an angle of view of, e.g., 50°, and acquires image data including a scanning range of the laser scanner 3. Relations among the image capturing optical axis 43, the ejection optical axis 26, and the reference optical axis O are known. In addition, the image capturing unit 14 can acquire a dynamic image or a continuous image.

The image capturing control unit 21 controls image capturing by the image capturing unit 14. When the image capturing unit 14 captures a dynamic image or a continuous image, the image capturing control unit 21 synchronizes timing at which frame images included in the dynamic image or the continuous image are acquired with timing at which scanning is performed with the laser scanner 3. The arithmetic control unit 19 also associates the image with the point group data.

The image capturing element 44 of the image capturing unit 14 is a CCD or CMOS sensor corresponding to a collection of pixels. Each of the pixels of the image capturing element 44 has a position that can be specified on an image element. For example, each of the pixels has pixel coordinates in a coordinate system with the image capturing optical axis 43 used as an origin point. The position on the image element is specified by the pixel coordinates. The image processing unit 22 performs image processing of superimposing information to be displayed using the operation device 4 on image data acquired by the image capturing unit 14 or the like. The image generated by the image processing unit 22 is displayed by the arithmetic control unit 19 on a display unit 4a of the operation device 4.

In the surveying system 1 according to the present invention, the acceleration sensor 631 included in the inclination sensor 6 is disposed in the gimbal mechanism 60 in a state where the origin point of the coordinate axes is coincident with the point of intersection of the left-right shaft center 646 of the left-right shaft 64 of the gimbal mechanism 60 and the front-rear shaft center 656 of the front-rear shaft 65 of the gimbal mechanism 60. The control unit 66 drives at least one of the second motor 644 and the first motor 654 to continuously rotate the acceleration sensor 631 around at least one of the left-right shaft 64 of the gimbal mechanism 60 and the front-rear shaft 65 of the gimbal mechanism 60.

For example, at such a time when a power source of the surveying system 1 in which the inclination sensor 6 is mounted is turned on or when a surveying button for acquiring the three-dimensional coordinates (three-dimensional data) or the point group data is pressed, the control unit 66 starts to rotate the acceleration sensor 631. When it is necessary to measure the inclination angle with respect to the horizontal direction, the acceleration sensor 631 constantly continues to rotate around at least one of the left-right shaft 64 of the gimbal mechanism 60 and the front-rear shaft 65 of the gimbal mechanism 60.

Then, when one of the output values from the acceleration sensor 631 indicates at least any one of the maximum value, the minimum value, and the median value between the maximum value and the minimum value, the control unit 66 arithmetically determines the inclination angle with respect to the horizontal direction on the basis of at least one of the rotation angle of the left-right shaft 64 detected by the second encoder 645 and the rotation angle of the front-rear shaft 65 detected by the first encoder 655.

In other words, the control unit 66 continuously rotates the acceleration sensor 631 to thereby continue to detect a time when the output value from the acceleration sensor 631 indicates any of the maximum value, the minimum value, and the median value between the maximum value and the minimum value, i.e., a time when one of the coordinate axes of the acceleration sensor 631 coincides with any of the direction of gravity, the direction opposite to gravity, and the direction perpendicular to gravity. Then, the control unit 66 detects at least one of the rotation angle of the left-right shaft 64 and the rotation angle of the front-rear shaft 65 when the coordinate axis of the acceleration sensor 631 coincides with any of the direction of gravity, the direction opposite to gravity, and the direction perpendicular to gravity. In other words, the control unit 66 determines the relationship between the timing at which the coordinate axis of the acceleration sensor 631 coincides with any of the direction of gravity, the direction opposite to gravity, and the direction perpendicular to gravity and at least one of the rotation angle of the left-right shaft 64 and the rotation angle of the front-rear shaft 65 at that timing. Then, the control unit 66 arithmetically determines the inclination angle with respect to the horizontal direction on the basis of at least one of the rotation angle of the left-right shaft 64 and the rotation angle of the front-rear shaft 65 at that timing.

Thus, the control unit 66 of the inclination sensor 6 in the surveying system 1 according to the present embodiment grasps not the output values from the acceleration sensor 631 themselves, but the timing at which one of the output values from the acceleration sensor 631 indicates any of the maximum value, the minimum value, and the median value between the maximum value and the minimum value, and arithmetically determines the inclination angle with respect to the horizontal direction on the basis of the rotation angle of the shaft (at least one of the left-right shaft 64 and the front-rear shaft 65) of the gimbal mechanism 60 at that timing. Thus, the control unit 66 can arithmetically determine the inclination angle with respect to the horizontal direction by grasping the timing at which the output values from the acceleration sensor 631 indicates any of the maximum value, the minimum value, and the median value between the maximum value and the minimum value, instead of acquiring high-accuracy output values from the acceleration sensor 631. This allows the inclination sensor 6 to suppress drift in the output values from the acceleration sensor 631 and ensure the accuracy of detecting the inclination angle with respect to the horizontal direction. This allows the surveying system 1 according to the present embodiment to acquire higher-accuracy three-dimensional data and image data to which the higher-accuracy three-dimensional data is given. In addition, since there is no need for a tilt sensor capable of high-accuracy detection or the like, it is possible to reduce a size of the inclination sensor 6. This allows a size of the surveying system 1 to be reduced.

Hereinabove, the embodiment of the present invention has been described. However, the present invention is not limited to the above-described embodiment, and various changes can be made without departing from the scope of the claims. The components of the above-described embodiment may be partially omitted or may be arbitrarily combined with each other so as to be different from that described above.

### [Reference Signs List]

- 1: Surveying system
- 2: Tripod
- 3: Laser scanner
- 3A: Distance measurement unit
- 4: Operation device
- 5: Mounting stand unit
- 6: Inclination sensor
- 7: Lever
- 8: Attachment
- 9: Casing
- 11: Measurement beam ejection unit
- 12: Beam reception unit
- 13: Distance measurement arithmetic unit
- 14: Image capturing unit
- 15: Ejection direction detection unit
- 16: Motor driver
- 18: Communication unit
- 19: Arithmetic control unit
- 20: Storage unit
- 21: Image capturing control unit
- 22: Image processing unit
- 23: Measurement beam
- 24: Reflected measurement beam
- 26: Ejection optical axis
- 27: Beam emission element
- 28: Projector lens
- 29: First reflecting mirror
- 31: Beam reception optical axis
- 32: Second reflecting mirror
- 33: Beam reception element
- 34: Imaging lens
- 35: Deflection unit
- 35a: Measurement beam deflection unit
- 35b: Reflected measurement beam deflection unit
- 36a, 36b: Optical prism
- 37a, 37b, 38a, 38b: Prism element
- 39a, 39b: Ring gear
- 41a, 41b: Drive gear
- 42a, 42b: Motor
- 43: Image capturing optical axis
- 44: Image capturing element
- 60: Gimbal mechanism
- 61: Outer frame
- 62: Inner frame
- 63: Inclination detection unit
- 64: Left-right shaft (second shaft)
- 65: Front-rear shaft (first shaft)
- 66: Control unit
- 73: Storage unit
- 631: Acceleration sensor
- 632: X-axis
- 633: Y-axis
- 634: Z-axis
- 641: Bearings
- 642: Second driven gear
- 643: Second drive gear
- 644: Second motor
- 645: Second encoder
- 646: Left-right shaft center
- 651: Bearings
- 652: First driven gear
- 653: First drive gear
- 654: First motor
- 655: First encoder
- 656: Front-rear shaft center
- 661: Arithmetic processing unit
- 662: Input/output control unit
- 663: Storage unit
- 676: Vertical shaft center
- 681: X-axis output value
- 682: Y-axis output value
- 683: Z-axis output value

## Claims

1. An inclination sensor comprising:
a gimbal mechanism that has a first shaft and a second shaft perpendicular to the first axis and that is rotatably supported around the first shaft and the second shaft;
a first motor that rotates the first shaft;
a second motor that rotates the second shaft;
a first encoder that detects a rotation angle of the first shaft rotated by the first motor;
a second encoder that detects a rotation angle of the second shaft rotated by the second motor;
an acceleration sensor that is disposed in the gimbal mechanism in a state where an origin point of coordinate axes is coincident with a point of intersection of a shaft center of the first shaft and a shaft center of the second shaft; and
a control unit that drives at least one of the first motor and the second motor, continuously rotates the acceleration sensor around at least one of the first shaft and the second shaft, and arithmetically determines an inclination angle with respect to a horizontal direction on the basis of at least one of the rotation angle of the first shaft and the rotation angle of the second shaft which are respectively detected by the first encoder and the second encoder when one of output values from the acceleration sensor indicates at least any one of a maximum value, a minimum value, and a median value between the maximum value and the minimum value.

2. The inclination sensor according to claim 1, wherein
the first shaft extends in a front-rear direction,
the second shaft extends in a left-right direction, and
the coordinate axes include an X-axis coincident with the shaft center of the first shaft and a Y-axis coincident with the shaft center of the second shaft.

3. The inclination sensor according to claim 2, wherein the control unit drives only the first motor to rotate the first shaft at a given speed, and arithmetically determines the inclination angle on the basis of the rotation angle of the first shaft detected by the first encoder when the output value from the Y-axis of the acceleration sensor indicates at least any one of the maximum value, the minimum value, and the median value between the maximum value and the minimum value.

4. The inclination sensor according to claim 2, wherein the control unit drives only the second motor to rotate the second shaft at a given speed, and arithmetically determines the inclination angle on the basis of the rotation angle of the second shaft detected by the second encoder when the output value from the X-axis of the acceleration sensor indicates at least any one of the maximum value, the minimum value, and the median value between the maximum value and the minimum value.

5. The inclination sensor according to any one of claims 1 to 4, wherein, when arithmetically determining the inclination angle, the control unit uses, among a plurality of output values output from the acceleration sensor, the output value that has a difference indicating not less than a predetermined value between the maximum value and the minimum value.

6. The inclination sensor according to any one of claims 1 to 5, wherein the control unit arithmetically determines a rotation speed of the first shaft on the basis of the rotation angle of the first shaft detected by the first encoder, arithmetically determines a rotation speed of the second shaft on the basis of the rotation angle of the second shaft detected by the second encoder, and executes an arithmetic operation to remove a component related to a centrifugal force which is included in the output value from the acceleration sensor due to at least one of the rotation speed of the first shaft and the rotation speed of the second shaft.

7. A data acquisition device comprising:
a distance measurement unit that includes a beam emission element that emits a measurement beam, a measurement beam ejection unit that ejects the measurement beam, a beam reception unit that receives a reflected measurement beam, and a beam reception element that receives the reflected measurement beam and generates a beam reception signal, the distance measurement unit measuring a distance to an object to be measured on the basis of the beam reception signal from the beam reception element;
the inclination sensor according to any one of claims 1 to 6; and
a control unit that controls the distance measurement unit,
the control unit of the inclination sensor being a first control unit,
the control unit that controls the distance measurement unit being a second control unit.
